# EUROPÄISCHE PATENTANMELDUNG

(11) **EP 3 178 626 A1**
(43) Veröffentlichungstag der Anmeldung: **14.06.2017**
(21) Anmeldenummer: 15199072.8
(22) Anmeldetag: 10.12.2015
(51) Int. Cl.: B29C 45/26, B22D 17/22

(54) **VERFAHREN ZUR HERSTELLUNG EINES WERKSTÜCKES MIT EINEM GEWINDELOCH**

(71) Anmelder: Siemens Aktiengesellschaft, 80333 München (DE)
(72) Erfinder: Görlich, Stefan, 92278 Illschwang (DE)

(57) **Zusammenfassung**

Um bei einem Verfahren zur Herstellung eines Werkstückes (60) nach dem Spritz- oder Druckgussverfahren, wobei zum Erzeugen eines Gewindelochs (1) in dem Werkstück (60) ein mit einem Gewindeprofil versehenes Einsatzelement (2) in einem Formenwerkzeug positioniert wird, wobei das Einsatzelement (2) aus einem ersten Teil (10) und einem zweiten Teil (20) auszugestalten, so dass nach einem Erstarren des Werkstoffes in dem Formenwerkzeug, in einem
- ersten Schritt zunächst der zweite Teil (20) des Einsatzelementes (2) aus dem Werkstück (60) herausgezogen werden kann und in einem
- zweiten Schritt wird der erste Teil (10) derart verdreht werden kann, dass auch dieser ohne ein aufwändiges Entspindeln aus dem Werkstück (60) herausgezogen werden kann.

## Beschreibung

Die Erfindung betrifft ein Verfahren zur Herstellung eines Werkstückes nach dem Spritz- oder Druckgussverfahren, wobei zum Erzeugen eines Gewindelochs in dem Werkstück ein mit einem Gewindeprofil versehenes Einsatzelement in einem FormenWerkzeug positioniert wird.

Des Weiteren betrifft die Erfindung ein Einsatzelement zum Erzeugen eines Gewindelochs in einem Werkstück, welches nach dem Spritz- oder Druckgussverfahren hergestellt wird, aufweisend ein Gewindeprofil.

Bei Bauteilen oder Werkstücken, die im Spritz- oder Druckgussverfahren hergestellt wurden, werden oft Innengewinde zum Befestigen von weiteren Bauteilen, Schrauben oder Rundsteckverbindern benötigt. Ein bisher bekanntes Verfahren des Entspindelns der Gewinde ist sehr zeitaufwändig, da ein Gewindekern des Werkzeuges über die komplette Länge des Gewindes aus dem gefertigten Werkstück oder Bauteil ausgeschraubt werden muss. Dies ist ein Vorgang, der je nach Gewindelänge relativ viel Zeit vom gesamten Herstellungsprozess in Anspruch nimmt. Um Bauteile oder Werkstücke mit beispielsweise einem Innengewinde in Spritz- oder Druckgussverfahren kostengünstig herstellen zu können, ist es wichtig, die sogenannte Zykluszeit für Spritz- oder Druckgussverfahren zu minimieren. Da die Entspindelungszeit maßgeblich in die Zykluszeit mit eingeht, ist es die Aufgabe der Erfindung die Entspindelungszeit zu verkürzen.

Die Aufgabe wird bei dem eingangs genannten Verfahren dadurch gelöst, dass das Einsatzelement aus einem ersten Teil und einem zweiten Teil zusammengesetzt wird, wobei das erste Teil zumindest teilweise als ein erster Zylinder ausgestaltet ist und eine erste Mantelfläche des ersten Zylinders in zumindest zwei Segmentflächen und zwei Freiflächen unterteilt wird, wobei die zumindest zwei Segmentflächen jeweils ein Ausschnitt aus dem Gewindeprofil aufweisen und die Freiflächen eine Ausnehmung in der ersten Mantelfläche bilden, der zweite Teil zumindest teilweise als ein zweiter Zylinder ausgestaltet ist und eine zweite Mantelfläche des zweiten Zylinders in zumindest zwei Segmentflächen und zwei Freiflächen unterteilt wird, wobei die zumindest zwei Segmentflächen derart ausgestaltet sind, dass sie in die Freiflächen des ersten Zylinders einsteckbar sind und die Freiflächen des zweiten Zylinders sind derart ausgestaltet, dass sie die Segmentflächen des ersten Zylinders aufnehmen, wobei ein Werkstoff in das Formwerkzeug gebracht wird und nach einem Erstarren des Werkstoffes in dem Formenwerkzeug, wird in einem ersten Schritt zunächst der zweite Teil des Einsatzelementes aus dem Werkstück herausgezogen und in einem zweiten Schritt wird der erste Teil derart verdreht, dass seine Segmentflächen sich in den Räumen befinden, welche durch die dort vorher positionierten Segmentflächen des zweiten Teils entstanden sind, in einem dritten Schritt wird der erste Teil aus dem Werkstück herausgezogen.

Mit Vorteil wird nun das Innengewinde eines Werkstückes nur in Segmenten ausgeformt und nicht als ein Vollzylinder. Zwischen den derart ausgeformten Gewindesegmenten liegen wiederum zylindrische Segmente, deren Außendurchmesser mindestens dem Außendurchmesser des Gewindes entspricht. Für das Spritz- oder Druckgusswerkzeug wird nun mit Vorteil ein Entformungskern als Einsatzelement umfassend einen ersten Teil und einen zweiten Teil eingesetzt. Der erste Teil formt die Gewindesegmente aus und der zweite Teil formt die zylindrischen Segmente aus, welche später den Raum zum Herauslösen des ersten Teils bilden.

Verfahrensgemäß ist es weiterhin vorteilhaft, das Einsatzelement mit Entformungsschrägen auszugestalten, so dass das Gewindeloch mit Entformungsschrägen hergestellt wird, wobei die Entformungsschrägen zumindest in den Randbereichen der Segmentflächen des zweiten Teils genutzt werden.

Bei dem Verfahren zur Herstellung einer Gehäuseschale für ein industrielles Automatisierungsgerät, wobei in dem Formenwerkzeug der Gehäuseschale eine Vielzahl von Einsatzelementen für eine Vielzahl von Gewindelöchern für die spätere Montage von Gewindesteckverbindern oder Rundsteckverbindern positioniert wird, ergibt sich durch das schnellere Herauslösen der Einsatzelemente ein besonderer Vorteil im Hinblick auf eine verkürzte Zykluszeit.

Für das eingangs genannte Einsatzelement wird die Aufgabe dadurch gelöst, dass das Einsatzelement einen ersten Teil und einen zweiten Teil aufweist, wobei der erste Teil zumindest teilweise als ein erster Zylinder ausgestaltet ist und eine erste Mantelfläche des ersten Zylinders in zumindest zwei Segmentflächen und zwei Freiflächen unterteilt ist, wobei die zumindest zwei Segmentflächen jeweils einen Ausschnitt aus dem Gewindeprofil aufweisen und die Freiflächen, eine Ausnehmung in der ersten Mantelfläche bilden, und der zweite Teil zumindest teilweise als ein zweiter Zylinder ausgestaltet ist und ein zweite Mantelfläche des zweiten Zylinders in zumindest zwei Segmentflächen und zwei Freiflächen unterteilt ist, wobei die zumindest zwei Segmentflächen derart ausgestaltet sind, dass sie in die Freiflächen des ersten Zylinders passen und die Freiflächen des zweiten Zylinders sind derart ausgestaltet, dass sie die Segmentflächen des ersten Zylinders aufnehmen. Vorzugsweise sind die Segmentflächen und die Freiflächen des ersten Zylinders und die Segmentflächen und die Freiflächen des zweiten Zylinders derart ausgestaltet, dass sie lückenlos ineinander greifen.

In einer besonderen Ausgestaltung weist bei dem Einsatzelement der erste Teil eine Steckachse auf, an deren einen Ende der erste Zylinder angeordnet ist und der zweite Teil verschiebbar auf der Steckachse angeordnet ist.

In der Zeichnung werden ein Ausführungsbeispiel und die Verfahrensschritte noch einmal näher erläutert. Es zeigt:
- FIG 1: ein Einsatzelement,
- FIG 2: ein Werkstück mit einem Gewindeloch betrachtet von einer Oberseite,
- FIG 3: das Werkstück aus FIG 2 betrachtet von einer Unterseite,
- FIG 4: das Einsatzelement in einer vergrößerten Darstellung,
- FIG 5: einen ersten Teil des Einsatzelementes,
- FIG 6: einen zweiten Teil des Einsatzelementes und
- FIG 7: die Verfahrensschritte des Herauslösens bzw. Entspindelns eines Einsatzelementes aus einem Werkstück.

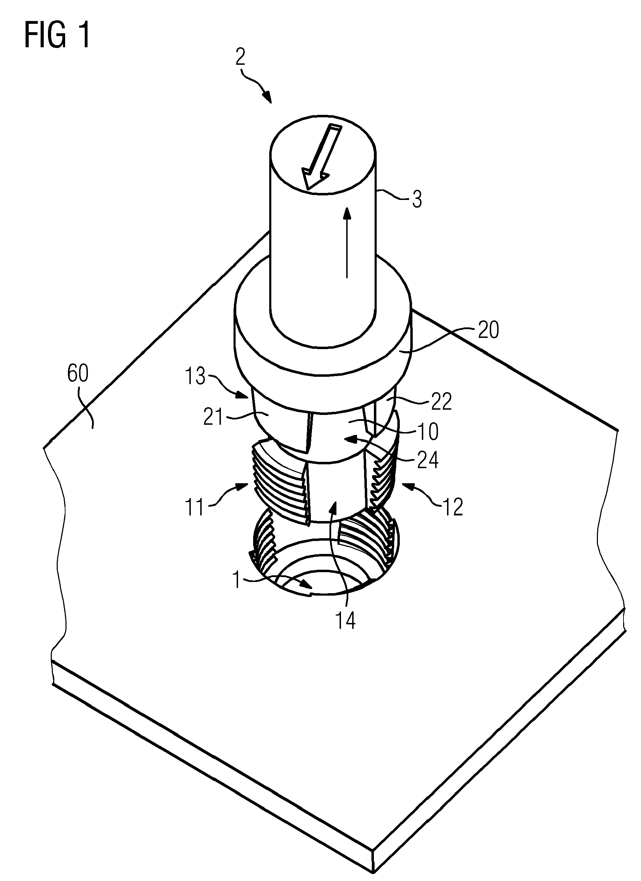

Gemäß FIG 1 ist ein Einsatzelement 2 zum Erzeugen eines Gewindeloches 1 in einem Werkstück 60 dargestellt. Zur Herstellung des Gewindeloches 60 wird bei einem Spritz- oder Druckgussverfahren vor dem Einbringen eines Werkstoffes in ein Formenwerkzeug das Einsatzelement 2 in dem Formenwerkzeug positioniert, wobei sich bei Einbringen des Werkstoffes in das Formenwerkzeug der Werkstoff um das Einsatzelement 2 anlagert und nach einem Erstarren des Werkstoffes kann das Einsatzelement 2 aus dem nach dem Spritz- oder Druckgussverfahren hergestellten Werkstück herausgelöst werden. Mit dem gezeigten Einsatzelement 2 ist es nunmehr möglich, eine Zykluszeit bei der Herstellung von Werkstücken erheblich herabzusetzen, weil ein Entspindelungsvorgangs des Einsatzelementes 2 für die Abformung eines Gewindeloches nun erheblich verkürzt ist. Dazu weist das Einsatzelement 2 einen ersten Teil 10 und einen zweiten Teil 20 auf, wobei der erste Teil 10 zumindest teilweise als ein erster Zylinder ausgestaltet ist und eine erste Mantelfläche des ersten Zylinders in einer ersten Segmentfläche 11, eine zweite Segmentfläche 12 und eine dritte Segmentfläche 13 und in entsprechende Freiflächen 14,15,16 unterteilt ist, wobei die Segmentflächen 11,12,13 jeweils einen Ausschnitt aus dem Gewindeprofil aufweisen und die Freiflächen 14,15,16 eine Ausnehmung in der ersten Mantelfläche bilden. Der zweite Teil 20 ist derart ausgestaltet, dass er verschiebbar auf einer Steckachse 3 des ersten Teils 10 in die Freiflächen 14,15,16 des ersten Zylinders eingeschoben werden kann. Der zweite Teil 20 weist damit jeweils um 120° versetzt eine erste Segmentfläche 21, eine zweite Segmentfläche 22 und eine dritte Segmentfläche 23 auf. Die Segmentflächen 21,22,23 des zweiten Teils 20 fügen sich lückenlos in die erste Freifläche 14, die zweite Freifläche 15 und die dritte Freifläche 16 des ersten Teils 10.

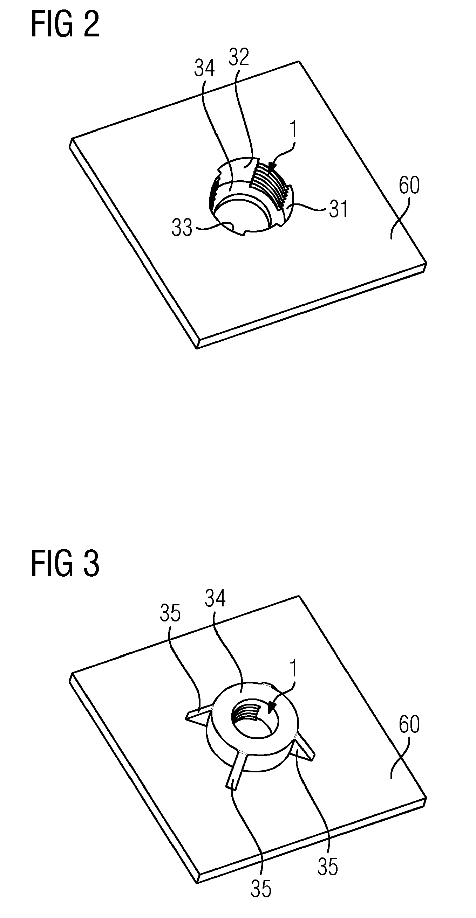

Mit der FIG 2 ist ein Werkstück 602015P24795EP mit einem Gewindeloch 1 in einer perspektivischen Ansicht mit Blick auf die Oberseite dargestellt. Das Gewindeloch 1 weist an den Stellen wo vor dem Ausspindeln des Einsatzelementes 2 die Segmentflächen 21,22,23 des zweiten Zylinders gesessen haben, jeweils einen ersten Raum 31, einen zweiten Raum 32 und einen dritten Raum 33 für das spätere Herauslösen des ersten Teils 10 auf.

Damit ein später einschraubbarer Rundsteckverbinder einen Anschlag hat, ist das Formenwerkzeug weiterhin dazu ausgestaltet, dass sich am unteren Ende des Gewindeloches 1 ein Kragen 34 befindet. Die Räume 31,32,33 werden beim Ausspindeln des Einsatzelementes mit Vorteil dafür genutzt, dass bei einem Verdrehen des Einsatzelementes 2 sich die Segmentflächen, 11,12,13 des ersten Zylinders, also des ersten Teils 10, in den Räumen 31,33,33 befinden und so das Einsatzelement 2 bzw. der erste Teil 10 aus dem Werkstück 60 herausgezogen werden kann.

Die FIG 3 zeigt das aus FIG 2 bekannte Werkstück 60 in einer Unteransicht auf das Gewindeloch 1. Das Formenwerkzeug ist vorteilhafter Weise an der Stelle wo später das Gewindeloch 1 entstehen soll, derart ausgestaltet, dass sich der Kragen 34 ausbildet und um den Kragen 34 herum können sich Stege 35 ausbilden, dies erhöht eine Fertigkeit des Gewindelochs 1.

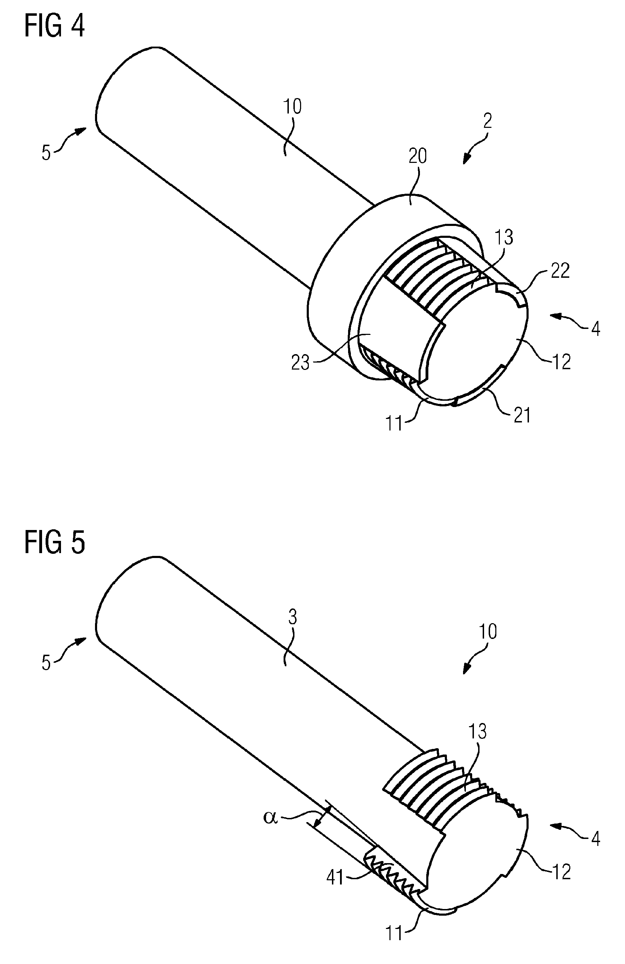

Gemäß der FIG 4 ist das Einsatzelement 2 umfassend den ersten Teil 10 und den zweiten Teil 20 in einer vergrößerten perspektivischen Darstellung abgebildet. Der zweite Teil 20 ist verschiebbar auf dem ersten Teil 10 gelagert. Gezeigt ist gemäß der FIG 4, dass der zweite Teil 20 mit seinen Segmentflächen 21,22,23 bzw. mit seinen teilzylindrischen Segmente in die Freiflächen 14,15,16 des ersten Zylinders des ersten Teils 10 lückenlos eingeschoben ist. Die erste Segmentfläche 11 bzw. das Gewindesegment, die zweite Segmentfläche 12 bzw. das Gewindesegment und die dritte Segmentfläche 13 bzw. das Gewindesegment bilden nach einem Spritz- oder Druckgussprozess später Teile eines Gewindes in die sich eine Schraube oder ein Rundsteckverbinder einschrauben lässt.

Mit der FIG 5 ist nur der erste Teil 10 des Einsatzelementes 2 dargestellt. Der erste Teil 10 umfasst im Wesentlichen eine Steckachse 3 an deren ersten Ende 4 zylinderförmig die Segmentflächen 11,12,13 bzw. die entsprechenden Gewindesegmente angeordnet sind. Die Gewindesegmente weisen eine Entformungsschräge 41 auf. Die Entformungsschräge 41 wird vorzugsweise mit einem Winkel α ausgebildet.

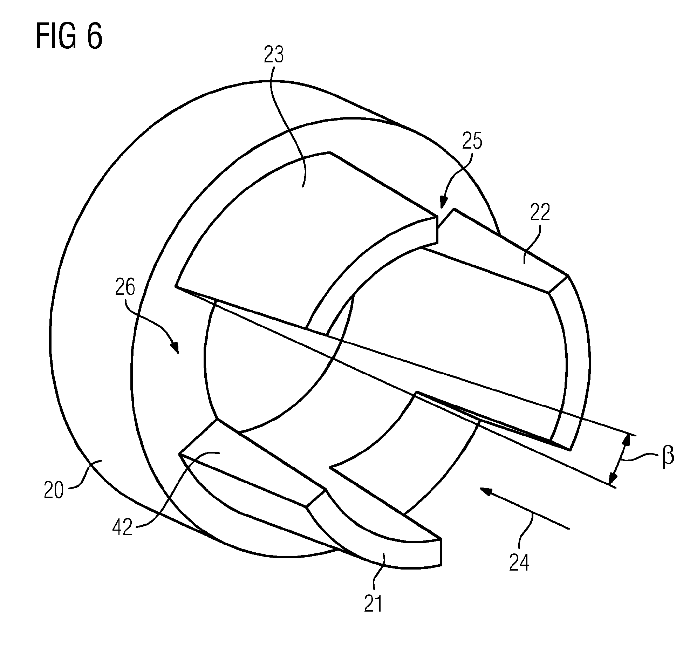

Mit der FIG 6 ist nur der zweite Teil 20 des Einsatzelementes 2 dargestellt. Deutlich zu erkennen ist eine zweite Entformungsschräge 42, welche durch den Winkel β gebildet ist. Die aus der ersten Segmentfläche 21, der zweiten Segmente 22 und der dritten Segmentfläche 23 gebildeten zylindrischen Teilsegmente sorgen nach einem Spritz- oder Druckgussverfahren später für den entsprechenden Freiraum für ein leichtes Herauslösen des Einsatzelementes 2. In der ersten Freifläche 24 kommt bei zusammengesteckten Einsatzelement 2 aus ersten Teil 10 und zweiten Teil 20 die erste Segmentfläche 11 des ersten Teils 10 zu liegen, in der zweiten Freifläche 25 kommt die zweite Segmentfläche 12 des ersten Teils 10 zu liegen und in der dritten Freifläche 26 kommt die dritte Segmentfläche 13 des ersten Teils 10 zu liegen.

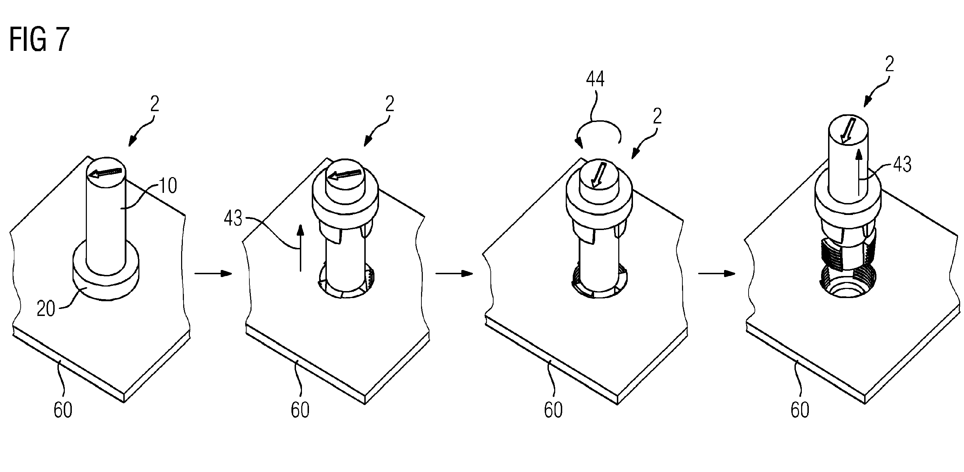

Gemäß der FIG 7 sind von links nach rechts die Verfahrensschritte dargestellt. Das Bild ganz links zeigt das Einsatzelement 2, wie es noch in dem Werkstück 60 nach einem Spritz- oder Druckgussprozess steckt. Um das Einsatzelement 2 aus dem Werkstück 60 heraus zu lösen, wird in einem ersten Schritt zunächst der zweite Teil 20 des Einsatzelementes 2 aus dem Werkstück 60 in einer Ausziehrichtung 43 herausgezogen. In einem zweiten Schritt wird der erste Teil 10 durch eine Drehung 44 derart verdreht, dass die Segmentflächen 11,12,13 sich nun in den Räumen (31,32,33) befinden. In einem dritten Schritt wird der erste Teil 10 wiederum in einer Ausziehrichtung 43 aus dem Werkstück 60 herausgezogen.

## Patentansprüche

1. Verfahren zur Herstellung eines Werkstückes (60) nach dem Spritz- oder Druckgussverfahren, wobei zum Erzeugen eines Gewindelochs (1) in dem Werkstück (60) ein mit einem Gewindeprofil versehenes Einsatzelement (2) in einem Formenwerkzeug positioniert wird, **dadurch gekennzeichnet, dass** das Einsatzelement (2) aus einem ersten Teil (10) und einem zweiten Teil (20) zusammengesetzt wird, wobei
- das erste Teil (10) zumindest teilweise als ein erster Zylinder ausgestaltet ist und eine erste Mantelfläche des ersten Zylinders in zumindest zwei Segmentflächen (11,12,13) und zwei Freiflächen (14,15,16) unterteilt wird, wobei die zumindest zwei Segmentflächen (11,12,13) jeweils einen Ausschnitt aus dem Gewindeprofil aufweisen und die Freiflächen (14,15,16) eine Ausnehmung in der ersten Mantelfläche bilden,
- der zweite Teil (20) zumindest teilweise als ein zweiter Zylinder ausgestaltet ist und eine zweite Mantelfläche des zweiten Zylinders in zumindest zwei Segmentflächen (21,22,23) und zwei Freiflächen (24,25,26) unterteilt wird, wobei die zumindest zwei Segmentflächen (21,22,23) derart ausgestaltet sind, dass sie in die Freiflächen (24,25,26) des ersten Zylinders einsteckbar sind und die Freiflächen des zweiten Zylinders sind derart ausgestaltet, dass sie die Segmentflächen (11,12,13) des ersten Zylinders aufnehmen,
wobei ein Werkstoff in das Formenwerkzeug gebracht wird und nach einem Erstarren des Werkstoffes in dem Formenwerkzeug, wird in einem
- ersten Schritt zunächst der zweite Teil (20) des Einsatzelementes (2) aus dem Werkstück (60) herausgezogen und in einem
- zweiten Schritt wird der erste Teil (10) derart verdreht, dass seine Segmentflächen (21,22,23) sich in den Räumen (31,32,33) befinden, welche durch die dort vorher positionierten Segmentflächen (21,22,23) des zweiten Teils (20) entstanden sind, in einem
- dritten Schritt wird der erste Teil (10) aus dem Werkstück (60) herausgezogen.

2. Verfahren nach Anspruch 1, wobei das Gewindeloch (1) mit Entformungsschrägen (41,42) hergestellt wird, wobei die Entformungsschrägen (41,42) zumindest in den Randbereichen der Segmentflächen (21,22,23) des zweiten Teils (20) genutzt werden.

3. Verfahren nach Anspruch 1 oder 2, zur Herstellung einer Gehäuseschale für ein industrielles Automatisierungsgerät, wobei in dem Formenwerkzeug der Gehäuseschale eine Vielzahl von Einsatzelementen (2) für eine Vielzahl von Gewindelöchern (1) für die spätere Montage von Gewindesteckverbindern positioniert wird.

4. Einsatzelement (2) zum Erzeugen eines Gewindelochs (1) in einem Werkstück (60), welches nach dem Spritz- oder Druckgussverfahren hergestellt wird, aufweisend ein Gewindeprofil, **dadurch gekennzeichnet, dass** das Einsatzelement (2) einem ersten Teil (10) und einem zweiten Teil (20) aufweist, wobei
- der erste Teil (10) zumindest teilweise als ein erster Zylinder ausgestaltet ist und eine erste Mantelfläche des ersten Zylinders in zumindest zwei Segmentflächen (11,12,13) und zwei Freiflächen (14,15,16) unterteilt ist, wobei die zumindest zwei Segmentflächen (11,12,13) jeweils einen Ausschnitt aus dem Gewindeprofil aufweisen und die Freiflächen (14,15,16) eine Ausnehmung in der ersten Mantelfläche bilden,
- der zweite Teil (20) zumindest teilweise als ein zweiter Zylinder ausgestaltet ist und eine zweite Mantelfläche des zweiten Zylinders in zumindest zwei Segmentflächen (21,22,23) und zwei Freiflächen (24,25,26) unterteilt ist, wobei die zumindest zwei Segmentflächen (21,22,23) derart ausgestaltet sind, dass sie in die Freiflächen (24,25,26) des ersten Zylinders passen und die Freiflächen des zweiten Zylinders sind derart ausgestaltet, dass sie die Segmentflächen (11,12,13) des ersten Zylinders aufnehmen.

5. Einsatzelement (2) nach Anspruch 4, wobei der erste Teil (10) eine Steckachse (3) aufweist an deren einem Ende (4) der erste Zylinder angeordnet ist und der zweite Teil (20) verschiebbar auf der Steckachse (3) angeordnet ist.
